# EUROPÄISCHE PATENTSCHRIFT

(11) **EP 2 998 698 B1**
(45) Veröffentlichungstag und Bekanntmachung des Hinweises auf die Patenterteilung: **01.02.2017**
(21) Anmeldenummer: 14185215.2
(22) Anmeldetag: 17.09.2014
(51) Int. Cl.: G01C 15/00, G02B 7/36, G01S 17/89, G06T 7/00, H04N 5/232, G01C 1/04

(54) **Vermessungsgerät mit Funktion zur Kalibrierung distanzabhängig einzustellender Fokussieroptikpositionen**
Surveying device with function for calibrating focussing lens positions based on distance
Dispositif d'arpentage doté d'une fonction d'étalonnage des positions d'optique de focalisation réglables en fonction de la distance

(43) Veröffentlichungstag der Anmeldung: 23.03.2016
(73) Patentinhaber: Leica Geosystems AG, 9435 Heerbrugg (CH)
(72) Erfinder: Kotzur, Norbert, CH-9450 Altstätten (CH); Zogg, Hans-Martin, CH-8592 Uttwil (CH)
(74) Vertreter: Gyaja, Christoph Benjamin

(56) Entgegenhaltungen:
- EP-A1- 1 607 766
- WO-A1-2013/080554
- DE-A1- 19 727 988

## Beschreibung

Die Erfindung betrifft ein Vermessungsgerät mit in der Anzieleinheit integrierter koaxialer Kamera, insbesondere Video-Theodolit oder Video-Tachymeter, nach dem Oberbegriff des Anspruchs 1 und 10.

Zum Vermessen eines Zielpunktes sind seit der Antike eine Vielzahl von geodätischen Verfahren bzw. geodätischen Geräten bekannt. Als räumliche Standarddaten werden dabei Entfernung und Winkel von einem Messgerät zum zu vermessenden Zielpunkt aufgenommen sowie insbesondere der Ort des Messgerätes nebst evtl. vorhandenen Bezugspunkten erfasst.

Ein allgemein bekanntes Beispiel für solche Vermessungsgeräte bzw. geodätische Geräte stellt ein Theodolit, ein Tachymeter oder eine Totalstation dar, die auch als elektronischer Tachymeter oder Computer-Tachymeter bezeichnet wird. Eine solche geodätische Messvorrichtung des Stands der Technik ist beispielsweise in der Veröffentlichungsschrift EP 1 686 350 beschrieben. Derartige Geräte verfügen über elektrosensorische Winkel- und Distanzmessfunktionen, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung ggf. noch mit einem äusseren Bezugssystem verknüpft werden.

Moderne Totalstationen verfügen über Mikroprozessoren zur digitalen Weiterverarbeitung und Speicherung erfasster Messdaten. Die Geräte sind in der Regel in kompakter und integrierter Bauweise hergestellt, wobei meist koaxiale Distanzmesssysteme sowie Winkelmesselemente, Rechen-, Steuer- und Speichereinheiten in einem Gerät integriert. sind. Abhängig von der Ausbaustufe der Totalstation sind Mittel zur Motorisierung der Zieloptik, zur reflektorlosen Streckenmessung, zur automatischen Zielsuche und Zielverfolgung und zur Fernsteuerung des gesamten Geräts integriert. Aus dem Stand der Technik bekannte Totalstationen verfügen weiters über eine Funkdatenschnittstelle zum Aufbau einer Funkverbindung zu externen Peripheriekomponenten wie z.B. zu einem Datenerfassungsgerät, welches insbesondere als handhaltbarer Datenlogger, Feldrechner, Notebook, Kleincomputer oder PDA ausgebildet sein kann. Mittels der Datenschnittstelle ist es möglich, von der Totalstation erfasste und gespeicherte Messdaten zur externen Weiterverarbeitung auszugeben, extern erfasste Messdaten zur Speicherung und/oder Weiterverarbeitung in die Totalstation einzulesen, Fernsteuersignale zur Fernsteuerung der Totalstation oder einer weiteren externen Komponente insbesondere im mobilen Feldeinsatz ein- bzw. auszugeben und Steuerungs-Software in die Totalstation zu überspielen.

Je nach Ausführung des zu vermessenden Zielpunkts variiert die beim Vermessungsvorgang erzielbare Messgenauigkeit. Wird der Zielpunkt beispielsweise durch einen speziell zur Vermessung ausgebildeten Zielreflektor - wie ein Rundumprisma - dargestellt, so können wesentlich genauere Messergebnisse erreicht werden als bei einer reflektorlosen Messung beispielsweise zu einem zu vermessenden Punkt einer Hauswand. Dies liegt unter anderem daran, dass der ausgesendete optische Messstrahl einen nicht punktförmigen sondern flächigen Strahlquerschnitt aufweist und somit nicht nur am eigentlich zu vermessenden Zielpunkt gestreute Messstrahlung empfangen wird, sondern auch von Punkten in der unmittelbaren Sichtfeldumgebung des Zielpunktes, die ebenso mit der Messstrahlung beaufschlagt werden. Beispielsweise beeinflusst in bekannter Weise die Rauhigkeit der Oberfläche des zu vermessenden Punktes die Genauigkeiten von reflektorlosen Messungen.

Zum Anvisieren bzw. Anzielen eines zu vermessenden Zielpunkts weisen gattungsgemässe Vermessungsgeräte eine Anzieleinrichtung (wie ein Teleskop) auf. In einer einfachen Ausführungsvariante ist die Visiereinrichtung beispielsweise als Zielfernrohr ausgebildet. Moderne Geräte können ausserdem eine in das Zielfernrohr integrierte Kamera zur Erfassung eines Bildes aufweisen, wobei das erfasste Bild insbesondere als Live-Bild auf einem Display der Totalstation und/oder einem Display des zur Fernsteuerung verwendeten Peripheriegeräts - wie eines Datenloggers - angezeigt werden kann.

Die zusätzlich zum Direktsichtkanal vorgesehene koaxiale Kamera (z.B. mit CCD- oder CMOS-Flächensensor) kann in einer weiteren in der Teleskopoptik vorgesehenen Bildebene angeordnet sein, wofür eine Auskopplung eines Teillichtstrahls über einen Strahlteiler vorgesehen sein kann, sodass mit der Kamera ein Bild durch das Objektiv aufnehmbar ist.

Das optische System bzw. der optische Sichtkanal der Anzieleinrichtung enthält insbesondere eine Objektivlinsengruppe, eine Fokussierlinsengruppe (Fokussieroptik) und ein Okular, die in dieser Reihenfolge von der Objektseite her angeordnet sind. Die Fokussieroptik verfügt dabei über einen Positionsmesser sowie einen Positionsgeber (Motor).

Voraussetzung für ein akkurates Anvisieren des Ziels ist die scharfe Abbildung des Sichtbereiches sowohl auf dem Display der integrierten Kamera als auch am Okular des Teleskops.

In einer einfachsten Ausführung kann die Scharfstellung über einen manuellen Fokus - beispielsweise eine Stellschraube zur Veränderung der Position der Fokussieroptik - erfolgen. Der manuelle Fokus, d.h. die manuell einstellbare Position der Fokussieroptik, hängt stets vom persönlichen Schärfeempfinden des Benutzers sowie vom Observationsmittel (z.B. Okular, Kamerdisplay) ab.

Die Kamera der Visiereinrichtung kann daher über eine Autofokuseinheit verfügen, wobei die Verstellung der Fokussieroptik z.B. durch Servomotoren erfolgt und z.B. mit Hilfe einer Kontrastbewertung auf einem bestimmten Array eines CMOS-Sensors oder über einen Phasenvergleich gesteuert wird. Automatische Fokussiereinrichtungen für Zielfernrohre geodätischer Geräte sind z.B. aus der DE 19710722, der DE 19926706 oder der DE 19949580 bekannt. Der Kamera-Autofokus funktioniert mit einer Auswertung der auf dem Kamerasensor ankommenden Lichtstrahlen. Im Falle eines kontrastbasierten Autofokus wird mit dem gefundenen Kontrasthöhepunkt eine Position der Fokussieroptik abgeleitet.

Die Position der Fokussieroptik kann zusätzlich - technologisch vereinfachend - im Rahmen einer distanzbasierten Autofokussier-Funktionalität abhängig von der mit einem optoelektronischen Distanzmesser gemessenen Objektentfernung so eingestellt werden, dass ein scharfes Objektbild auf dem Kamerasensor oder einem in der Scharfstellebene angeordneten optischen Element mit Anzielmarkierung entsteht (insbesondere Retikel oder Strichplatte, oder Platte mit Fadenkreuzmarkierung und Strichmarkierungen). Dieses optische Element mit dem in dieser Ebene erzeugten Bild kann dann durch das Okular betrachtet werden. Bei der distanzbasierten Autofokussierung wird eine mit dem optoelektronischen Distanzmesser gemessene Entfernung direkt in eine Stellung der Fokussieroptik übersetzt. Dies geschieht z.B. anhand einer Lookup-Tabelle, eines Diagramms oder einer Kurve, in welcher die Korrelation zwischen Zieldistanzen und einzustellenden Fokussieroptik-Positionen abgespeichert sind.

Die DE 197 988 A1 und die EP 1 607 766 A1 offenbaren Autofokusfunktionalitäten mit Kalibrierkoeffizienten für die Fokussierungsoptik.

Für die koaxiale elektronische Distanzmessung kann im Vermessungsgerät ein zusätzlicher separater Sende- und Empfangskanalzweig vorgesehen sein. Zudem weisen gängige Vermessungsgeräte inzwischen eine automatische Zielverfolgungs-Funktion (ATR: "Automatic Target Recognition") auf, für die eine weitere separate ATR-Lichtquelle - z.B. ein Multimodefaserausgang, der Licht mit einer weiteren definierten Wellenlänge emittiert - sowie ein spezieller ATR-Kamerasensor zusätzlich im Teleskop integriert sind.

Beispielhaft ist der Aufbau gattungsgemässer Zielfernrohre von geodätischen Geräten in den Veröffentlichungsschriften EP 1 081 459 oder EP 1 662 278 gezeigt.

Die hohe Komplexität des Teleskops bedingt einen hohen Aufwand für die erforderliche hochpräzise Montage und Justage der optischen Komponenten, welche Linsen, Prismen und Strahlteiler umfassen können. Während der Produktion erfolgt daher eine extern gesteuerte, einfache Kalibrierung, sodass am Durchsichtsucher wie auf dem Display - nach Fokussierung auf das gleiche Ziel zum einen anhand des manuellen Fokus und zum anderen anhand des Kamera-Autofokus und/oder Distanz-Autofokus - ein gleich scharfes Bild zu sehen ist.

Für die zieldistanzabhängige Auto-Fokussierfunktion wird im Rahmen der Produktion eine standardisierte, anhand von z.B. polynomischen Koeffizienten abgespeicherte Autofokus-Referenzkurve benützt, welche erfahrungsgemäss bzw. statistisch erwiesen bei der Mehrheit der Geräte zu einem bestmöglichen Fokussier-Ergebnis führt. Die besagte Kurve ordnet die mit dem optoelektronischen Distanzmesser messbare Zieldistanz der einzustellenden Fokussieroptik-Position zu. Mit wenigen Kalibriermassnahmen wird bei jedem Gerät ein eventuell vorhandener gerätespezifischer Fokus-Versatz bestimmt und dann als pauschales Offset mit der Autofokus-Referenzkurve verrechnet.

Allerdings bleiben derartige, durch die Fertigungskalibrierung behobene Fehler im Laufe der Zeit nicht stabil. So werden diese beeinflusst beispielsweise durch physische Erschütterung (etwa während Transports), durch Temperatureinflüsse oder durch andere sich zeitbedingt ändernde Materialeigenschaften. Eine mögliche Folge dessen ist, dass nach der Fokussierung über den Distanzmesser oder nach der Fokussierung über den Autofokus der Kamera entweder nur das Bild am Durchsichtssucher des Teleskops oder nur das Bild auf dem Kameradisplay, bzw. keines der beiden Bilder, scharf dargestellt wird. Dann ist weiterer Zeitaufwand nötig, um durch manuelles Nach-Fokussieren über das Stellrad der Fokussieroptik entweder am Durchsichtssucher des Teleskops oder auf dem elektronischen Viewfinder bzw. dem Display der Kamera ein scharfes Bild zu erhalten.

Die Aufgabe der Erfindung ist es, eine Rekalibrierungsfunktionalität für ein Vermessungsgerät bereitzustellen, welche die bei der Werkskalibrierung gespeicherten und mit der Zeit und/oder unter bestimmten Einflüssen (z.B. Erschütterungen) hinsichtlich der Fokussieroptik-Positionen unstimmig bzw. ungenau gewordenen Kalibrierkoeffizienten einfach und schnell erneuert, sodass bei der zieldistanzabhängigen Auto-Fokussierung Scharfstellungsfehler vermieden werden.

Eine weitere Aufgabe der Erfindung ist, einen durch die gleichen Ursachen ausgelösten Scharfstellungsfehler bei der kameragesteuerten Autofokussierung zu beheben.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung stellt eine Rekalibrierungsfunktionalität bereit, mit der es dem Benutzer möglich ist, die zieldistanzabhängige Autofokus-Referenzkurve mit Hilfe des Kamera-Autofokus und/oder des manuellen Fokus anhand einer speziellen, unter der Leitung einer Gerätesoftware durchgeführten Probe-Messsequenz anzupassen oder zu erneuern. Auf ebendiese Weise kann auch der Kamera-Autofokus mit Hilfe des manuellen Fokus korrigiert werden. Der Vorteil einer solchen Kalibrierung ist, dass der Benutzer das jeweilige Autofokus-System individuell im Feld kalibrieren kann, ohne dafür auf eine spezielle Kalibrierungsumgebung angewiesen zu sein oder das Vermessungsgerät zur Service Stelle geben zu müssen. Nach Bedarf kann also durch die Ausführung einer solchen Rekalibrierung jederzeit sichergestellt werden, dass durch die distanzbasierte Autofokussierung sowohl am Okular als auch auf dem Kameradisplay ein scharfes Bild zur Verfügung steht bzw. dass der Kamera-Autofokus zumindest in der Kamerasensorebene ein scharfes Bild zur Verfügung stellt. Dieser Vorgang kann entweder regelmässig im Rahmen einer wiederkehrenden Überprüfung erfolgen oder nach Bedarf, um einen bereits erkannten Schärfefehler zu beheben.

Da die Abweichungen von einer idealen Kurve insbesondere im nahen und mittel-weiten Fokussierbereich relevant sind, sind die zu vermessenden Stützpunkte einer neuen Soll-Kurve für ein besseres Ergebnis insbesondere in diesem Bereich zu konzentrieren. Deshalb kann z.B. die Kalibrierungs-Gerätesoftware den Benutzer anweisen, Objekte für die Rekalibrierung anzuvisieren, die sich in einer solchen Distanz zum Vermessungsgerät befinden, welche eine ideale Referenzkurve mathematisch am charakteristischsten beschreiben.

In einer Ausführungsform der Erfindung wird der Benutzer in einem ersten Schritt dazu aufgefordert ein Ziel anzuvisieren und mit Zweit-Fokussiermitteln, wie z.B. Kamera-Autofokus oder manueller Fokussierung, auf dieses Ziel zumindest ein Mal scharfzustellen. Zweit-Fokussiermittel sind jegliche Fokussiermittel, die verschieden sind von dem distanzabhängigen Autofokus. Bei den anvisierten Zielen kann es sich um künstliche wie um natürliche Ziele handeln.

Nach der manuellen Fokussierung gibt der Benutzer - z.B. über einen Knopf, einen Touch-Befehl auf dem Display oder eine berührungslose Geste - dem Vermessungsgerät in einem zweiten Schritt den Befehl, die momentan vorherrschende Fokussieroptik-Position als diejenige Position abzuspeichern, bei der die gewünschte Soll-Schärfe erreicht ist. Simultan oder sequentiell dazu wird mit dem optoelektronischen Distanzmesser die Entfernung zu dem anvisierten. Ziel gemessen. Denkbar ist auch eine Ausführung der Erfindung, in welcher zunächst eine Distanzmessung und dann die Scharfstellung auf das Ziel mit anschliessender Ermittlung der Fokussieroptik-Position erfolgt.

Die bei der Fokussierung mit den Zweit-Fokussiermitteln erfasste Fokussieroptik-Position wird abgespeichert und in Relation zu der erfassten Zieldistanz z.B. in eine Lookup-Tabelle oder in eine Kurve eingetragen, wobei z.B. je eine Kurve eigens für die jeweilige Fokussiermethode existiert. Um eine gewünschte Standardabweichung zu erfassen, können die Ermittlungen der Fokussieroptik-Positionen beispielsweise mehrfach hintereinander oder mit verschiedenen Fokussier-Methoden wiederholt werden, um dann als Ergebnis einer statistischen Auswertung abgespeichert zu werden. Die statistische Auswertung gibt einerseits dem Benutzer einen Indikator für die Qualität der Feld-Kalibrierungs-Prozedur und dient andererseits als Abbruchkriterium für den Fall, dass beispielsweise ein unerfahrener Benutzer den Kalibrierungsprozess ausführt und dabei weit streuende Ergebnisse erzielt.

Nachdem diese Schrittfolge am ersten Ziel vollzogen ist, erfolgt die gleiche Prozedur an weiteren Zielen, die sich in einer vom ersten Ziel verschiedenen Entfernung zum Vermessungsgerät befinden. Insgesamt erfolgen N Schrittfolgen, wobei N grösser oder gleich zwei ist. Es werden also N Messpunkte an N Zielen erfasst, mit denen, z.B. durch polynomische Approximation, eine Fokuskurve erstellt wird.

Aufgrund von Fertigungsungenauigkeiten und/oder physischen Umwelteinflüssen ergeben sich bei dem Vermessungsgerät, stets - wenn auch sehr geringe - Unterschiede hinsichtlich der Fokussieroptik-Positionen, wenn auf verschiedene Weisen auf ein definiertes Ziel scharf gestellt wird. Diese Fokussierarten sind zum Beispiel ein distanzabhängiger Autofokus, ein kameragesteuerter Autofokus oder ein manueller Fokus, bei welchem der Benutzer über die Schärfe des Bildes urteilen muss, wobei auch das subjektive Schärfeempfinden eines Benutzers relevant ist.

Da moderne Videototalstationen zusätzlich zum optischen Teleskop-Durchsichtssucher (Okular) auch über einen elektronischen Sucher verfügen können - z.B. in Form eines Displays oder eines Elektro-Optischen Viewers (EOV) -, der das am Kamerasensor projizierte Bild wiedergibt, existieren somit potentiell mindestens zwei verschiedene Observierungsmöglichkeiten für den manuellen Fokus. Ebenfalls aufgrund von Fertigungsungenauigkeiten und/oder physischen Umwelteinflüssen können sich durch minimale WegDifferenzen im Strahlengang Schärfeunterschiede ergeben. Andersherum betrachtet kann sich also eine Differenz der Kurven derartig zeigen, dass bei gleicher Fokussieroptik-Position unterschiedlich scharfe Bilder projiziert werden, d.h. z.B. auf den Kamerasensor und die Okularmattscheibe. In diesem Falle ist die Weglänge des optischen Pfads vom scharf zu stellenden Zielobjekt bis zum Kamerasensor nicht identisch mit derjenigen Weglänge bis zur Okularmattscheibe, was etwa durch einen für das Kamera-System abgezweigten Strahlengang bedingt sein kann.

Wenn also beispielsweise der Kamera-Autofokus korrekt funktioniert - d.h. nach einer Kamera-Autofokussierung auf dem Display ein scharfes Bild angezeigt wird -, dann stimmen bei Scharfstellung des gleichen Ziels die Fokussieroptik-Positionen der Kurve des manuellen Fokus (betrachtet am LCD) überein mit den Fokussieroptik-Positionen erreicht durch den Kamera-Autofokus. In diesem Falle wäre dann durch die besagte Streckendifferenz der Strahlengänge gleichzeitig das am Okular sichtbare Bild unscharf. Die Kurve des manuellen Fokus (betrachtet am Okular) würde dann von der Kurve des manuellen Fokus (betrachtet am LCD) abweichen. Ebenso wäre dann das am Okular sichtbare Bild nach einer Kamera-Autofokussierung unscharf.

Zu jeder Observierungs-Methode für die manuelle Fokussierung gibt es infolgedessen eine eigene Kurve bzw. ein eigenes Diagramm. Diese Kurven werden so ermittelt, dass die Scharfstellpositionen der Fokussieroptik zieldistanzabhängig aufgezeichnet werden. Die Kurve des distanzabhängigen Autofokus unterscheidet sich von allen anderen Kurven insofern, da sie a priori für dessen Funktionalität bekannt sein muss. Der Kurve des distanzabhängigen Autofokus werden anhand von Eingangsdaten (gemessene Distanzen) im Vorhinein korrelierte Daten entnommen (Fokussieroptik-Positionen). Die Kurven des Kamera-Autofokus und der manuellen Fokussierungen (mit jeweils unterschiedlicher Observations-Methode) werden a posteriori aufgezeichnet und dienen per se keiner Funktionsausführung, sondern nur der Auswertung im Nachhinein.

Sind nach einer distanzabhängigen Autofokussierung das Bild am optischen Durchsichtssucher des Teleskops und das Bild auf dem Display der Kamera hinsichtlich der Fokussieroptik um den gleichen positionellen Betrag (mit gleichem Vorzeichen) unscharf - das würde bedeuten, dass die beiden Kurven des manuellen Fokus (Okular, LCD) zumindest hinreichend identisch sind -, so kann sich eine Kurvenkorrektur des distanzabhängigen Autofokus-Systems an der Schärfekurve eines der beiden oder auch beider manuellen Fokusse orientieren.

Ist nach einer distanzabhängigen Autofokussierung hingegen das Bild an mindestens einer der beiden ObservierungsMöglichkeiten - LCD und Okular - unscharf und sind die beiden dazu gehörigen Kurven der manuellen Fokusse nicht identisch, so kann sich eine Korrektur der Kurve des distanzabhängigen Autofokus an einer solchen zu berechnenden Kurve orientieren, die sich rechnerisch aus den beiden Schärfekurven der manuellen Fokusse ergibt, z.B. durch Mittelung oder statistisch gewichtete Mittelung. Dadurch, dass die dann korrigierte Autofokus-Kurve während ihres gesamten Verlaufs betragsmässig die gleiche Abweichung (mit je gegensätzlichen Vorzeichen) jeweils zu den beiden ermittelten Kurven der manuellen Fokusse hat, wird erreicht, dass beide Observations-Methoden nach erfolgtem Distanz-Autofokus ein hinreichend scharfes Bild anzeigen.

Insbesondere wenn diejenige optische Einheit der Kamera, welche letztlich für die Ermittlung der Fokussieroptik-Positionen verantwortlich ist, nicht der Kamerasensor selbst ist, kann es zu längenmässigen Differenzen und somit Unschärfe am Kamerasensor kommen. Dies ist z.B. bei Autofokusmethoden der Fall, die für einen Phasenvergleich einen abgezweigten Strahlengang nutzen.

Funktioniert der Kamera-Autofokus nicht korrekt, kann also ein weiteres Problem von der Autofokussier-Einheit der Kamera ausgehen. Wenn nach erfolgter Kamera-Autofokussierung das auf dem LCD sichtbare, ergo das auf den Kamerasensor projizierte Bild unscharf ist, dann benötigt der Kamera-Autofokus eine Korrektur, um scharfe Bilder aufnehmen und anzeigen zu lassen. Dieses Problem kann durch Streckendifferenzen der Strahlengänge ausgelöst werden, wenn ein innerhalb des Kamera-Systems per Strahlenteiler abermals abgezweigter Strahlengang eigens für die Autofokussierung involviert ist, beispielsweise realisiert durch einen Phasenvergleichs-Autofokus. Auch dieses Problem kann erfindungsgemäss behoben werden.

Eine solche Korrektur der Kamera-Autofokussierung ist insbesondere dann nötig, wenn aus dem Stand der Technik bekannte Videototalstationen mit der Kamera aufgenommene und über den Kamera-Autofokus fokussierte Bilder zusammen mit den Distanzmessungsdaten abspeichern. Eine regelmässige Kalibrierung der durch den Kamera-Autofokus erzielten Fokussieroptik-Positionen bewirkt, dass diese abzuspeichernden Fotos stets scharf sind. Abhängig von der nach erfolgter Kamera-Autofokussierung eingestellten Fokussieroptik-Position wird dazu ein korrektives Offset abgezogen bzw. addiert. Es wird mit den von einander verschiedenen Kurven des Kamera-Autofokus und der des manuellen Fokus (betrachtet am LCD) eine Korrektiv-Verschiebung ermittelt, z.B. auch durch Mittelung oder statistisch gewichtete Mittelung. Eine Korrektur der Kamera-Autofokussierung findet derart statt, dass ein Differenz-Verlauf gebildet wird und dieser von nun an bei einer kameragesteuerten Autofokussierung positionsabhängig in Bezug auf die Fokussieroptik berücksichtigt wird.

In einer weiteren Ausführungsform der Erfindung wird daher der Benutzer in einem ersten Schritt dazu aufgefordert ein Ziel anzuvisieren und auf dieses Ziel zumindest je ein Mal sowohl eine Kamera-Autofokussierung als auch eine manuelle Fokussierung vorzunehmen, wobei die Reihenfolge dieser beiden Fokussier-Methoden unerheblich ist. Nach erfolgter Kamera-Autofokussierung wird die momentane Fokussieröptik-Position automatisch erfasst und gespeichert. Nach erfolgter manueller Fokussierung wird die momentane Fokussieroptik-Position auf einen Befehl vom Benutzer hin erfasst und gespeichert. Dieser Befehl kann dem Vermessungsgerät beispielsweise über einen Knopf, ein Touch-Display, einen Stimmendetektor oder eine Gestenerkennung gegeben werden. In einem zweiten Schritt wird die Differenz der erfassten Fokussieroptik-Positionen von der Auswerte- und Steuereinheit berechnet und dem Benutzer eine künftige Korrektur dieser Differenz angeboten. Bejaht der Benutzer die Abfrage auf dem Bedienungsdisplay, so wird von da an im Anschluss an eine Kamera-Autofokussierung automatisch die Fokussieroptik-Position um die ermittelte Differenz nachträglich verschoben. Für die Ermittlung dieser Fokussieroptik-Positions-Differenz kann der besagte erste Schritt entweder anhand desselben Zieles oder anhand verschiedener Ziele wiederholt werden, wobei dann die ermittelten Differenzen gemittelt oder gewichtet gemittelt werden.

Bei einer typischen Ein-Mann-Vermessungsaufgabe mit Zielreflektor wird beispielsweise im Gelände ein Vermessungsgerät, insbesondere eine Totalstation, aufgestellt. Der Benutzer bewegt eine handgehaltene Vermessungsstange, die einen Zielreflektor trägt, an einen zu vermessenden Zielpunkt, wobei daraufhin die Position des Zielreflektors und somit des Zielpunkts wie folgt bestimmt werden kann. Die Steuerung des Vermessungsgerätes erfolgt insbesondere ferngesteuert durch den die Vermessungsstange tragenden Benutzer mittels eines in Funkverbindung zum Vermessungsgerät stehenden Datenloggers. Der Datenlogger kann dabei an der mit dem Zielreflektor ausgestatteten Vermessungsstange angebracht oder neben der Vermessungsstange zusätzlich durch den Benutzer handgehalten werden. Das Anvisieren des Ziels kann dabei unter Verwendung eines dem Benutzer im Display des Datenloggers anzeigbaren Live-Bildes erfolgen, das von der im Zielfernrohr angeordneten Kamera als Visiereinrichtung des Vermessungsgerätes bereitgestellt wird. Mit Hilfe dieses Videostreams kann die Software des Datenloggers den Benutzer zu den in für die Kalibrierung benötigten Entfernungen zum Vermessungsgerät gelegenen Orten führen.

Um die Rekalibrierungsfunktionalität für den distanzabhängigen Autofokus auch bei der Ein-Mann-Vermessung zu ermöglichen, kann das zuvor beschriebene Verfahren ferngesteuert durch den mit dem Vermessungsgerät drahtlos verbundenen Datenlogger erfolgen. Befindet sich der Benutzer also an der von der Software des Datenloggers vorgesehenen Position, kann fernauslösbar durch den Datenlogger zunächst eine zieldistanzabhängige Autofokussierung des Vermessungsgerätes auf das vom Benutzer positionierte Ziel, dann eine kamerabasierte Autofokussierung und anschliessend ein Vergleich zwischen den beiden dabei erreichten Fokussieroptik-Positionen, bzw. zwischen zuvor durch manuelle Fokussierung erreichten Fokussieroptik-Positionen und den durch die beiden genannten Autofokussierungsmethoden erreichten Fokussieroptik-Positionen, erfolgen. Auf den Vergleich kann - auch ferngesteuert durch z.B. eine entfernt gelegene Kontrollzentrale - entweder eine Überprüfung oder eine korrigierende Anpassung der Autofokus-Systeme folgen. Der fernsteuernde Computer der Kontrollzentrale ist dabei über drahtlose Technologien, wie dem Internet oder Funk, mit dem Vermessungsgerät verbunden und ist in der Lage die Rekalibrierung vollständig zu steuern.

Geht man von einer akkuraten oder hinreichend genauen Kamera-Autofokussierung in Bezug auf das am Sensor und an der Mattscheibe des Teleskops projizierte Bild aus, so kann für die steuernde Software - gleich ob geräteintern oder geräteextern - ein vollautomatischer Rekalibrierungsmodus vorgesehen sein. In einem Vorgang ist es dann möglich, ausgelöst durch einen Benutzer oder durch das Vermessungsgerät selbst, insbesondere automatisch, bei gleich bleibender Anvisierung eines Ziels zuerst eine optoelektronische Entfernungsmessung und anschliessend eine kameragesteuerte Autofokussierung ausgelöst werden. Die dabei jeweils ermittelten Fokussieroptik-Positionen werden mit den entsprechenden für den distanzabhängigen Autofokus hinterlegten Fokussieroptik-Positionen verglichen. Die Referenzkurve des distanzbasierten Auto-Fokussystems wird dann gegebenenfalls auf Basis der ermittelten Differenzen korrigiert. Auch die Anvisierung bzw. Findung der in den benötigten Distanzen gelegenen Ziele kann durch den Benutzer oder insbesondere durch das Vermessungsgerät selbst automatisch erfolgen. Die automatische Zielfindung kann z.B. anhand definiert voreingestellter Fokussieroptik-Positionen erfolgen, wobei während der systematischen Suche (Verstellung der Stütze und der Anzieleinheit) mit dem Kamera-Autofokus kontinuierlich überprüft wird, ob auf das momentan anvisierte Objekt im Sichtfeld scharf gestellt ist. Ist anhand dieser Methode eine Anvisierung erfolgt, wird eine optoelektronische Distanzmessung durchgeführt und die damit gemessene Distanz in Korrelation zu der vorgegebenen Fokussieroptik-Position dem Messdatensatz zugefügt. Anhand einer Auswertung des Messdatensatzes können dann hinsichtlich Stimmigkeit der jeweils einander zugeordneten Distanzen und Ist-Positionen der Fokussieroptik mit den im Rahmen der Autofokussier-Funktionalität zieldistanzabhängig einzustellenden Fokussieroptik-Positionen die gespeicherten Kalibrierkoeffizienten überprüft und insbesondere ggf. erneuert werden.

Um eine konstante Genauigkeit des distanzbasierten Autofokus zu gewährleisten, kann durch den Benutzer ein Intervall festgelegt werden, in welchem - auch während einer regulären Vermessungsaufgabe - eine Rekalibrierung automatisch durchgeführt wird oder zumindest an eine solche erinnert wird. Die Abweichungen werden im Hintergrund berechnet und entweder automatisch korrigiert oder über eine Warnung in der Benutzeroberfläche angezeigt. Alternativ kann auch erst vor einem Misstand in Bezug auf Abweichungen der Fokussieroptik-Positionen gewarnt werden, wenn eine definierte Schwelle erreicht wurde. Wurde diese Schwelle als mit der erfindungsgemässen Rekalibrierungsfunktionalität unkalibrierbar gross detektiert, wird der Benutzer angewiesen, das Vermessungsgerät in den Kundenservice zu geben.

Die erfindungsgemässe Vorrichtung wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: die figürliche Darstellung eines erfindungsgemässen Vermessungsgerätes;
- Fig. 2: den optischen Strahlengang in einem erfindungsgemässen Vermessungsgerät;
- Fig. 3a,b,c: die Korrelation von Objektdistanz zu Fokussieroptik-Position im Kurvendiagramm sowie zur Veranschaulichung die Darstellung eines Vermessungsgerätes mit Reflektorstab in den entsprechenden Entfernungen;
- Fig. 4: als mögliche Fokuskurven die des Distanz-Autofokus D-AF, die des Kamera-Autofokus K-AF, des manuellen Fokus betrachtet am LCD MF (LCD) und des manuellen Fokus betrachtet am Sucher MF (Sucher);
- Fig. 5: die Korrektur der Kurve des Distanz-Autofokus D-AF durch Verschiebung zu einer Ziel-Fokuskurve;
- Fig. 6: die Mittelung zweier Kurven des manuellen Fokus (einerseits betrachtet am LCD, andererseits betrachtet am Sucher);
- Fig. 7: die Mittelung einer Kurve des manuellen Fokus und einer Kurve des Kamera-Autofokus zu einer Ziel-Fokuskurve;
- Fig. 8: das Ablaufdiagramm der Rekalibrierungsfunktion für den Distanz-Autofokus;
- Fig. 9: das logische Netzwerk der Rekalibrierungsfunktion für den Distanz-Autofokus mit Wahrheitstabelle;
- Fig. 10: das Ablaufdiagramm der Korrekturfunktion für den Kamera-Autofokus;
- Fig. 11: das logische Netzwerk der Korrekturfunktion für den Kamera-Autofokus mit Wahrheitstabelle; und
- Fig. 12: die Differenzkurve zur Korrektur des Kamera-Autofokus.

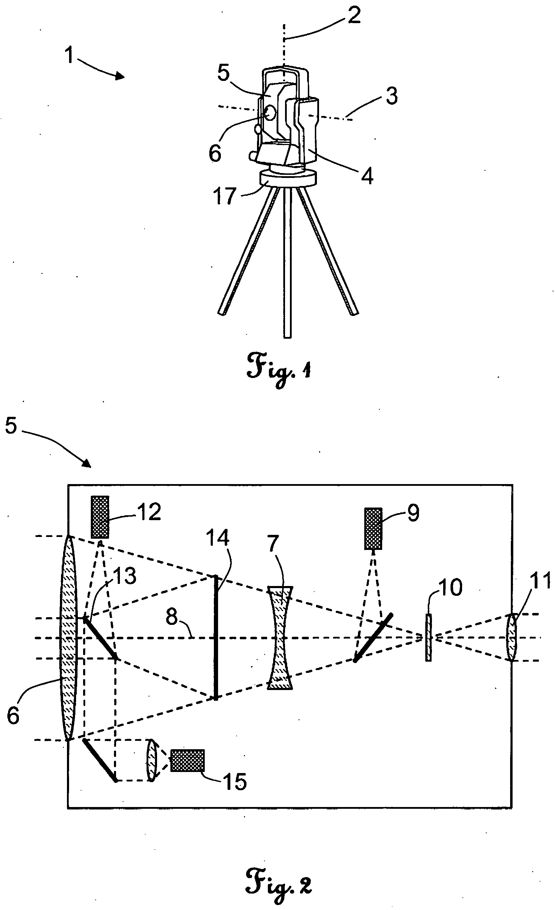

Figur 1 zeigt das erfindungsgemässe Vermessungsgerät 1 mit der auf der Basis 17 gelagerten und um die erste Achse 2 schwenkbaren Stütze 4 und der relativ zur Stütze 4 um die zweite Achse 3 schwenkbaren Anzieleinheit 5, welche die Komponenten der Teleskop-Optik, insbesondere das Objektiv 6, enthält.

Figur 2 zeigt die schematische Darstellung einer Anzieleinheit 5 mit Teleskop-Optik, wie diese auch bereits im Stand der Technik hinlänglich bekannt ist. Die Anzieleinheit 5 weist das Objektiv 6, die motorisiert verstellbare Fokussieroptik 7, einen - koaxial zur optischen Achse 8 der Anzieleinheit 5 ausgerichteten - Kamerasensor 9 zur Erfassung eines Kamera-Bildes, eine Mattscheibe 10 sowie ein Okular 11 auf.

Der Kamerasensor 9 ist dabei mit einem elektronischen Grafikprozessor zur Generierung eines Anzeigebilds aus dem erfassten Kamera-Bild verbunden. Der Grafikprozessor ist wiederum mit einem Display oder elektro-optischen Viewfinder verbunden, sodass das generierte Anzeigebild anhand des Displays dargestellt werden kann.

Das Objektiv 6 kann z.B. auch mehrlinsig aufgebaut oder panfokal - mit veränderlichem Sichtfeld - ausgeführt sein.

Für die Distanzmessung und die automatische Zielsuchfunktion ist eine Laserquelle 12 vorgesehen, wobei der Laserstrahl anhand eines Strahlkombinierers 13 - wie beispielsweise einer Strahlteilerfläche mit dichroitischer Beschichtung - entsprechend ein- und ausgekoppelt wird.

Die Laserquelle 12 kann z.B. Laserstrahlen im visuellen Bereich - etwa mit einer Wellenlänge von 630 nm - emittieren, sodass ein Messfleck am Zielobjekt sichtbar ist.

Zwischen dem Strahlkombinierer 13 und der Fokussieroptik 7 kann dabei ein Strahlauskoppler 14 vorhanden sein, der die Laserstrahlen auskoppelt, hingegen das visuelle Spektrum vorteilhaft möglichst ungehindert transmittiert. Die ausgekoppelten Laserstrahlen werden durch den Strahlkombinierer 13 auf einen Empfänger 15 gelenkt.

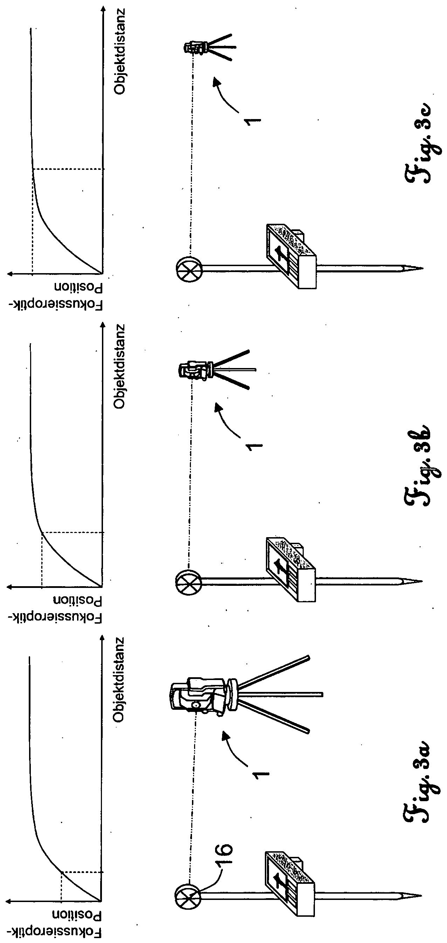

Die Figuren 3a, 3b und 3c zeigen identische Diagramme, in denen die zum Scharfstellen benötigte Fokussieroptik-Position in Abhängigkeit der Distanz zwischen Vermessungsgerät 1 und Objekt 16 abgetragen ist. Entsprechend den darunter dargestellten figürlichen Veranschaulichungen sind mit den gestrichelten Linien in den Diagrammen die jeweiligen Ist-Korrelationen zwischen Fokussieroptik-Position und Objektdistanz gezeigt.

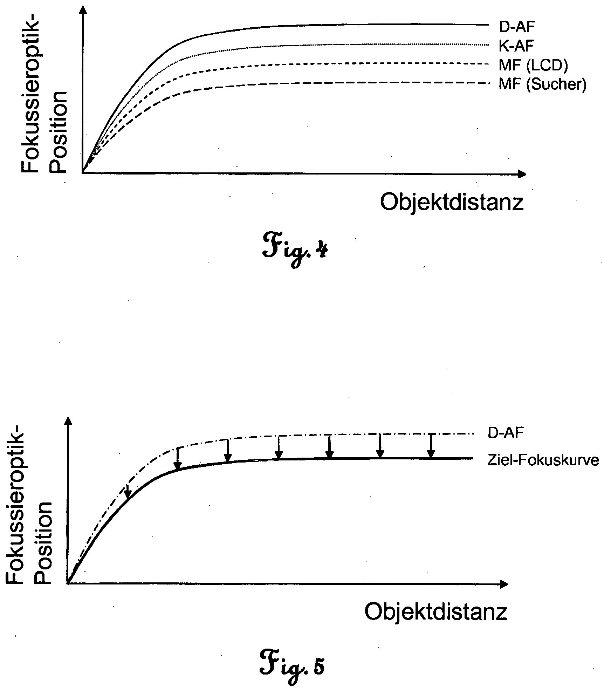

Figur 4 zeigt mögliche Fokuskurven, wobei die Kurve D-AF beispielhaft die kalibrierbaren Scharfstellpunkte der distanzabhängigen Autofokussier-Funktionalität abträgt. Die Kurve K-AF zeigt beispielhaft die nur a posteriori und mit Hilfe des Distanzmessers ermittelbaren Scharfstellpunkte der Kamera-Autofokussier-Funktionalität. Die Kurven MF (jeweils LCD und Sucher) zeigen beispielhaft die nach manueller Fokussierung - zum einen augenscheinlich beurteilt am Display der Kamera (LCD) und zum anderen augenscheinlich beurteilt am Okular (Sucher) - erreichten Scharfstellpositionen der Fokussieroptik in Abhängigkeit der Objektdistanz.

Figur 5 zeigt eine simple Kurven-Korrektur für die distanzabhängige Autofokussier-Funktionalität in Form einer Verschiebung bzw. Ersetzung. Hierbei werden die gespeicherten Kalibrierkoeffizienten erneuert, sodass die Kurve D-AF zu einer Ziel-Fokuskurve verschoben bzw. durch diese ersetzt wird.

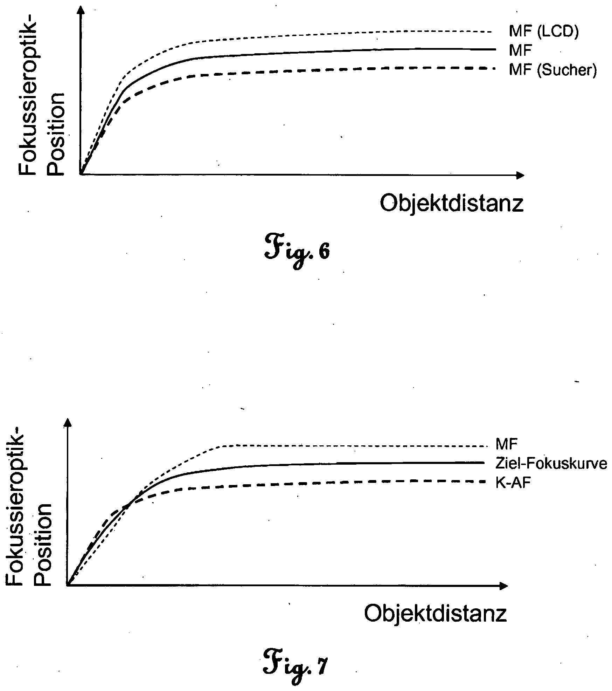

Figur 6 zeigt eine durch Mittelung erzeugte und beispielsweise als Ziel-Fokuskurve für eine Kurven-Korrektur oder für eine weitere Mittelung heranzuziehende Kurve MF des manuellen Fokus. Diese resultierende Kurve MF hat zu den Einzel-Kurven MF (LCD) und MF (Sucher) stets den gleichen Abstand und zeichnet sich dadurch aus, dass an den distanzabhängig einzustellenden Fokussieroptik-Positionen das Bild auf dem Kameradisplay und das Bild am Okular den gleichen Schärfegrad aufweisen.

Figur 7 zeigt die Mittelung einer Fokuskurve des manuellen Fokus MF mit der Fokuskurve der Kamera-Autofokus-Funktion K-AF. Als dabei resultierende Kurve geht eine Ziel-Fokuskurve hervor, die wiederum beispielsweise gemäss Figur 5 zur Rekalibrierung der Kurve D-AF herangezogen werden kann.

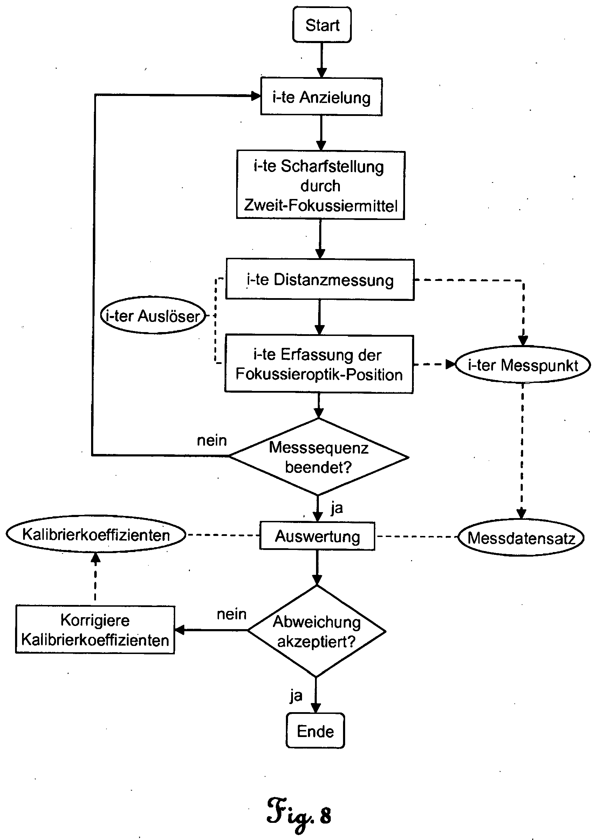

Figur 8 zeigt den Ablauf der Rekalibrierungsfunktionalität für die distanzabhängige Autofokussier-Funktion. Für die Rekalibrierungsfunktionalität ist ein Ablauf von N sukzessive durchzuführenden Anzielungen auf ein jeweiliges i-tes Ziel, mit i fortlaufend aus eins bis N, mit jeweiliger über die Zweit-Fokussiermittel (z.B. K-AF oder MF) erfolgender Scharfstellung und Distanzmessung definiert. Die entsprechenden Ablauf-Informationen dafür sind in der Auswerte- und Steuereinheit hinterlegt. Beim Erreichen von N Durchläufen ist die Messsequenz zum Beispiel beendet, wobei N nicht zwangsläufig im Vorhinein festgelegt sein muss.

Im Rahmen der Rekalibrierungsfunktionalität werden automatisch gesteuert bzw. durchgeführt durch die Auswerte- und Steuereinheit für jede i-te der N Anzielungen auf einen jeweiligen i-ten Auslöser hin, nach erfolgter Anzielung sowie über die Zweit-Fokussiermittel erfolgter Scharfstellung des i-ten Ziels, automatisch durch den Distanzmesser eine i-te Distanz gemessen und eine i-te Ist-Position der Fokussieroptik erfasst und jeweils einander zugeordnet einem Messdatensatz hinzugefügt.

Anhand einer Auswertung des Messdatensatzes hinsichtlich Stimmigkeit der jeweils einander zugeordneten i-ten Distanzen und i-ten Ist-Positionen der Fokussieroptik mit den im Rahmen der Autofokussier-Funktionalität zieldistanzabhängig einzustellenden Fokussieroptik-Positionen werden die gespeicherten Kalibrierkoeffizienten überprüft und insbesondere ggf. erneuert.

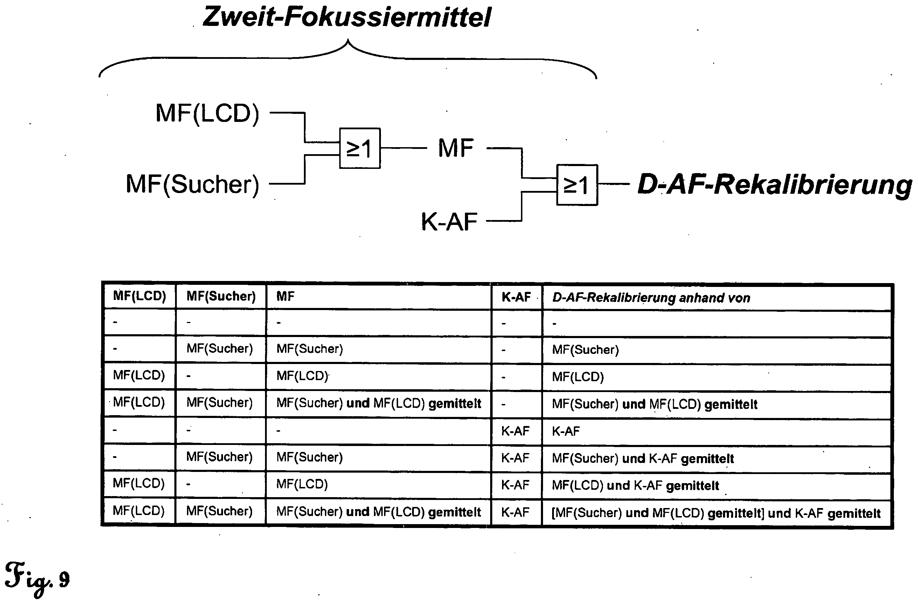

Das logische Netzwerk aus Figur 9 zeigt, in welcher Weise die Zweitfokussiermittel zur Rekalibrierung der Kurve D-AF herangezogen werden können. Für einen Überblick der Möglichkeiten ist die dazugehörige Wahrheitstabelle abgebildet. Demnach gibt es mit den im logischen Netzwerk dargestellten Zweitfokussiermitteln sieben Kalibrierungsmöglichkeiten der distanzabhängigen Autofokussier-Funktionalität.

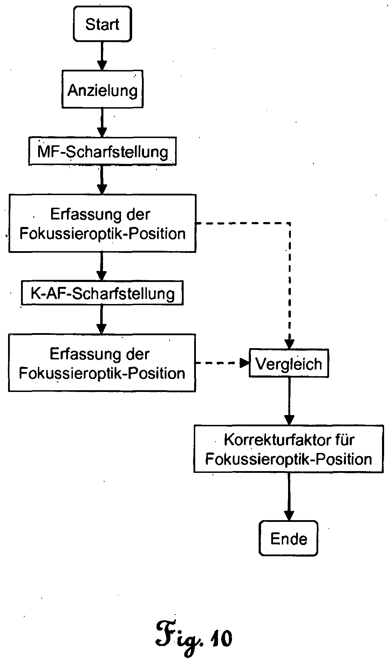

Figur 10 zeigt den Ablauf der Korrekturfunktionalität für die Kamera-Autofokussier-Funktion. Im Rahmen der Korrekturfunktionalität ist nach Anzielung eines Ziels ein Vergleich zwischen der nach einer manuellen Fokussierung erlangten Fokussieroptik-Position und der nach einer Kamera-Autofokussierung erlangten Fokussieroptik-Position ziehbar. Die hierbei ggf. ermittelte Differenz der Fokussieroptik-Positionen (bei gleichem Fokussier-Ziel) ist im Anschluss an nachfolgende Kamera-Autofokussierungen hinsichtlich einer automatischen Positions-Korrektur der Fokussieroptik pauschal über den gesamten Positions-Bereich, z.B. in Form eines Korrekturfaktors, berücksichtigbar.

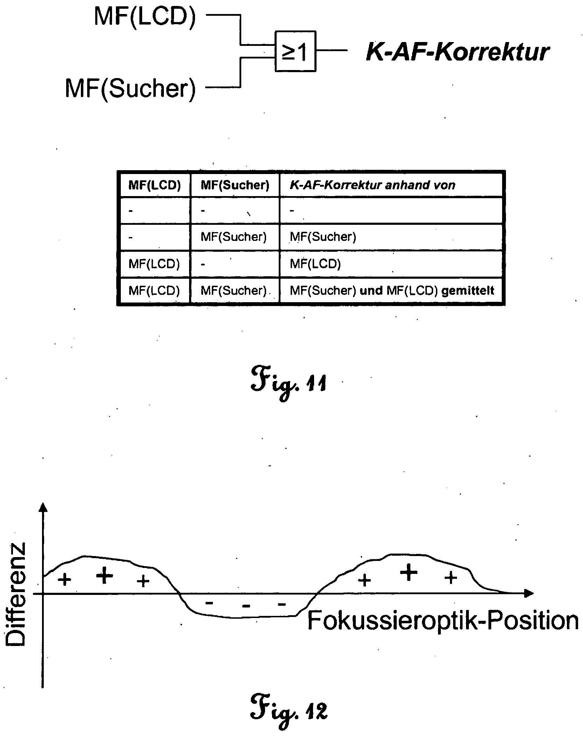

Das logische Netzwerk aus Figur 11 zeigt, in welcher Weise die beiden manuellen Fokusse MF(LCD) und MF(Sucher) zur Korrektur der Kamera-Autofokussier-Funktion herangezogen werden können. Für einen Überblick der Möglichkeiten ist die dazugehörige Wahrheitstabelle abgebildet. Demnach gibt es mit den im logischen Netzwerk dargestellten manuellen Fokussier-Methoden drei Korrekturmöglichkeiten der Kamera-Autofokussier-Funktion.

Figur 12 zeigt einen Korrekturfaktor-Verlauf über den gesamten Fokussieroptik-Positions-Bereich. Dieser Verlauf kann z.B. durch Interpolation N erfasster Fokussieroptik-Positionsdifferenzen erzeugt werden und zur Positions-Korrektur der Fokussieroptik nach erfolgter Kamera-Autofokussierung herangezogen werden. Mit dem Diagramm ist demzufolge ein Auf- oder Abschlag zu jeder Fokussieroptik-Position ablesbar. Dieser Verlauf kann auch als Lookup-Tabelle realisiert werden.

Es versteht sich für den Fachmann, dass die verschiedenen Mittel zur Rekalibrierung der zieldistanzabhängigen Autofokussier-Funktionalität miteinander in alternativer oder ergänzender Weise kombiniert werden können.

## Patentansprüche

1. Vermessungsgerät (1), insbesondere Video-Theodolit oder Video-Tachymeter, mit
• einer Basis (17),
• einer relativ zur Basis um eine erste Achse (2) schwenkbaren Stütze (4),
• einer relativ zur Stütze um eine zweite Achse (3) schwenkbaren Anzieleinheit (5) mit einer einen optischen Strahlengang definierenden Teleskop-Optik mit mindestens einem Objektiv (6) und einer motorisiert verstellbaren Fokussieroptik (7) sowie
□ einem Okular (11) und/oder
□ einem Kamerachip (9) zur Aufnahme eines Bildes durch das Objektiv,
• Winkelmesser zur Messung von Schwenkstellungen von der Stütze und der Anzieleinheit,
• einem elektro-optischen Distanzmesser (12, 13, 14, 15),
• einer Auswerte- und Steuereinheit, die eine kalibrierte Autofokussier-Funktionalität zur automatischen Einstellung der Fokussieroptik in Abhängigkeit von einer mit dem Distanzmesser gemessenen Zieldistanz bereitstellt und dafür gespeicherte Kalibrierkoeffizienten bezüglich zieldistanzabhängig einzustellender Fokussieroptik-Positionen enthält, und
• mindestens einem Zweit-Fokussiermittel zur unabhängig von einer mit dem Distanzmesser messbaren Distanz erfolgenden Scharfstellung eines anvisierten Ziels (16) durch Verstellung der Fokussieroptik,
**gekennzeichnet durch**
eine zumindest teilweise automatisch ablaufende und zur Ausführung im Feld vorgesehene Rekalibrierungsfunktionalität für die zieldistanzabhängige Autofokussier-Funktionalität, wobei für die Rekalibrierungsfunktionalität ein Ablauf von N, mit N grösser oder gleich zwei, sukzessive durchzuführenden Anzielungen auf ein jeweiliges i-tes Ziel, mit i fortlaufend aus eins bis N, mit jeweiliger über die Zweit-Fokussiermittel erfolgender Scharfstellung und Distanzmessung definiert ist und dafür entsprechende Ablauf-Informationen in der Auswerte- und Steuereinheit hinterlegt sind,
und wobei im Rahmen der Rekalibrierungsfunktionalität automatisch gesteuert bzw. durchgeführt **durch** die Auswerte- und Steuereinheit
• für jede i-te der N Anzielungen auf einen jeweiligen i-ten Auslöser hin, nach erfolgter Anzielung sowie über die Zweit-Fokussiermittel erfolgter Scharfstellung des i-ten Ziels, automatisch **durch** den Distanzmesser eine i-te Distanz gemessen und eine i-te Ist-Position der Fokussieroptik erfasst und jeweils einander zugeordnet einem Messdatensatz hinzugefügt werden, und
• automatisch anhand einer Auswertung des Messdatensatzes hinsichtlich Stimmigkeit der jeweils einander zugeordneten i-ten Distanzen und i-ten Ist-Positionen der Fokussieroptik mit den im Rahmen der Autofokussier-Funktionalität zieldistanzabhängig einzustellenden Fokussieroptik-Positionen die gespeicherten Kalibrierkoeffizienten überprüft und insbesondere ggf. erneuert werden.

2. Vermessungsgerät (1) nach Anspruch 1,
**gekennzeichnet durch**
ein Display, insbesondere einen Electro Optical Viewer (EOV), als Observationsmöglichkeit zur Anzeige eines auf dem Kamerasensor (9) projizierten Bildes.

3. Vermessungsgerät (1) nach einem der vorherigen Ansprüche,
**dadurch gekennzeichnet, dass**
die Zweit-Fokussiermittel ausgebildet sind zur durch einen Benutzer manuell gesteuert erfolgenden Verstellung der Fokussieroptik (7), wobei die Bildschärfe über mindestens eine Observationsmöglichkeit augenscheinlich beurteilbar ist.

4. Vermessungsgerät (1) nach einem der vorherigen Ansprüche, unter Vorhandensein eines Kamerachips (9) zur Aufnahme eines Bildes durch das Objektiv (6) und
die Fokussieroptik (7),
**dadurch gekennzeichnet, dass**
die Zweit-Fokussiermittel ausgebildet sind zur automatischen Fokussierung nach dem Prinzip der Kantenkontrastmessung, insbesondere wobei hierfür der Kamerachip als Autofokus-Sensor verwendet wird, oder nach dem Prinzip des Phasenvergleichs, insbesondere unter Anwendung von Linien- oder Kreuzsensoren als Autofokus-Sensor.

5. Vermessungsgerät (1) nach einem der vorherigen Ansprüche,
**dadurch gekennzeichnet, dass**
mehrere Messdatensätze für die Auswertung miteinander verrechenbar, insbesondere gewichtet verrechenbar sind.

6. Vermessungsgerät nach einem der vorherigen Ansprüche,
**dadurch gekennzeichnet, dass**
die Messdatensätze durch Interpolation, insbesondere durch mit Polynomen erreichbare Approximation zu Referenzkurven berechnet werden, sodass zu jeder messbaren Zieldistanz eine zugeordnete Fokussieroptik-Position abrufbar ist.

7. Vermessungsgerät (1) nach einem der vorherigen Ansprüche,
**dadurch gekennzeichnet, dass**
die Rekalibrierungsfunktionalität von einer Fernsteuerung aus durchführbar ist.

8. Vermessungsgerät (1) nach einem der vorherigen Ansprüche,
**dadurch gekennzeichnet, dass**
• bei Überschreiten einer definierten Betragsschwelle hinsichtlich der Abweichung zwischen der jeweils einander zugeordneten i-ten Distanz und i-ten Ist-Position mit der im Rahmen der Autofokussier-Funktionalität zieldistanzabhängig einzustellenden Fokussieroptik-Position eine Warnmeldung wiedergebbar ist und/oder
• bei Unterschreiten dieser Betragsschwelle die Abweichung automatisch und simultan in die Kalibrierkoeffizienten einkalkuliert wird.

9. Vermessungsgerät (1) nach einem der vorherigen Ansprüche, unter Vorhandensein eines Kamerachips (9) zur Aufnahme eines Bildes durch das Objektiv (6) und
die Fokussieroptik (7),
**dadurch gekennzeichnet, dass**
die Rekalibrierungsfunktionalität vollautomatisch, insbesondere in regelmässigen Zeitabständen selbstständig, ausführbar ist.

10. Vermessungsgerät (1), insbesondere Video-Theodolit oder Video-Tachymeter, mit
• einer Basis (17),
• einer relativ zur Basis um eine erste Achse (2) schwenkbaren Stütze (4),
• einer relativ zur Stütze um eine zweite Achse (3) schwenkbaren Anzieleinheit (5) mit einer einen optischen Strahlengang definierenden Teleskop-Optik mit mindestens einem Objektiv (6) und einer motorisiert und manuell verstellbaren Fokussieroptik (7) sowie insbesondere
□ einem Okular (11) und
□ einem Kamerachip (9) zur Aufnahme eines Bildes durch das Objektiv,
• Winkelmesser zur Messung von Schwenkstellungen von der Stütze und der Anzieleinheit,
• einer Auswerte- und Steuereinheit, durch welche die Positionen der Fokussieroptik speicherbar und verrechenbar sind,
• einer Kamera-Autofokussier-Funktion nach dem Prinzip der Kantenkontrastmessung, insbesondere wobei hierfür der Kamerachip als Autofokus-Sensor verwendet wird, oder nach dem Prinzip des Phasenvergleichs, insbesondere unter Anwendung von Linien- oder Kreuzsensoren als Autofokus-Sensor, und
• einem manuellen Fokussiermittel zur durch einen Benutzer manuell gesteuert erfolgenden Verstellung der Fokussieroptik, wobei die Bildschärfe durch mindestens eine Observationsmöglichkeit augenscheinlich beurteilbar ist,
**gekennzeichnet durch**
eine zur Ausführung im Feld vorgesehene Korrekturfunktionalität für die Kamera-Autofokussier-Funktion, wobei im Rahmen der Korrekturfunktionalität nach Anzielung eines Ziels
• zwischen der nach einer manuellen Fokussierung erlangten Fokussieroptik-Position und der nach einer Kamera-Autofokussierung erlangten Fokussieroptik-Position ein Vergleich ziehbar ist,
• und die ggf. ermittelte Differenz der Fokussieroptik-Positionen im Anschluss an Kamera-Autofokussierungen hinsichtlich einer automatischen Positions-Korrektur der Fokussieroptik pauschal über den gesamten Positions-Bereich berücksichtigbar ist.

11. Vermessungsgerät nach Anspruch 10,
**dadurch gekennzeichnet, dass**
an N anvisierten, unterschiedlich vom Messgerät entfernten Zielen N Differenzen der Fokussieroptik-Positionen ermittelt werden und diese durch Interpolation zu Differenzkurven berechnet werden, sodass zu jeder durch eine Kamera-Autofokussierung erreichbaren Fokussieroptik-Position eine zugeordnete Differenz zur Positions-Korrektur abrufbar ist.

## Claims

1. Surveying apparatus (1), in particular video theodolite or video tachymeter, comprising
• a base (17),
• a support (4) pivotable about a first axis (2) relative to the base,
• a targeting unit (5) pivotable about a second axis (3) relative to the support and comprising a telescope optical unit - defining an optical beam path - comprising at least one objective (6) and a motorized-adjustable focusing optical unit (7) and also
□ an eyepiece (11) and/or
□ a camera chip (9) for recording an image through the objective,
• goniometers for measuring pivoting positions of the support and the targeting unit,
• an electro-optical distance measuring device (12, 13, 14, 15),
• an evaluation and control unit, which provides a calibrated autofocusing functionality for automatically setting the focusing optical unit in a manner dependent on a target distance measured by the distance measuring device and contains for this stored calibration coefficients with regard to focusing optical unit positions to be set in a target-distance-dependent manner, and
• at least one second focusing means for focusing - independently of a distance measurable by the distance measuring device - a sighted target (16) by adjusting the focusing optical unit,
**characterized by**
a recalibration functionality for the target-distance-dependent autofocusing functionality, said recalibration functionality proceeding at least partly automatically and being provided for implementation in the field, wherein for the recalibration functionality a sequence of N, where N is greater than or equal to two, targetings - to be carried out progressively - of a respective i-th target, where i runs consecutively from one to N, with respective focusing performed via the second focusing means and distance measurement is defined and for this corresponding sequence information is stored in the evaluation and control unit,
and wherein in the context of the recalibration functionality in a manner automatically controlled or carried out by the evaluation and control unit
• for every i-th of the N targetings in response to a respective i-th trigger, after targeting has been performed and focusing of the i-th target has been performed via the second focusing means, automatically an i-th distance is measured by the distance measuring device and an i-th actual position of the focusing optical unit is detected and, respectively assigned to one another, they are added to a measurement data set, and
• automatically on the basis of an evaluation of the measurement data set with regard to coherence of the i-th distances and i-th actual positions of the focusing optical unit that are respectively assigned to one another with the focusing optical unit positions to be set in a target-distance-dependent manner in the context of the autofocusing functionality, the stored calibration coefficients are checked and in particular renewed, if appropriate.

2. Surveying apparatus (1) according to Claim 1,
**characterized by**
a display, in particular an electro-optical viewer (EOV), as observation possibility for displaying an image projected on the camera sensor (9).

3. Surveying apparatus (1) according to either of the preceding claims,
**characterized in that**
the second focusing means are designed for adjusting the focusing optical unit (7) in a manner performed under manual control by a user, wherein the image sharpness is assessable evidently by eye by means of at least one observation possibility.

4. Surveying apparatus (1) according to any one of the preceding claims, with the presence of a camera chip (9) for recording an image through the objective (6) and the focusing optical unit (7),
**characterized in that**
the second focusing means are designed for automatic focusing according to the principle of edge contrast measurement, in particular wherein the camera chip is used as an autofocus sensor for this purpose, or according to the principle of phase comparison, in particular with the use of line or cross sensors as an autofocus sensor.

5. Surveying apparatus (1) according to any one of the preceding claims,
**characterized in that**
a plurality of measurement data sets are computable with one another, in particular computable with one another in a weighted fashion, for the evaluation.

6. Surveying apparatus according to any one of the preceding claims,
**characterized in that**
the measurement data sets are calculated by interpolation, in particular by approximation achievable with polynomials with respect to reference curves, such that an assigned focusing optical unit position is retrievable for every measurable target distance.

7. Surveying apparatus (1) according to any one of the preceding claims,
**characterized in that**
the recalibration functionality is implementable from a remote control.

8. Surveying apparatus (1) according to any one of the preceding claims,
**characterized in that**
• upon the overshooting of a defined absolute value threshold with regard to the deviation between the i-th distance and i-th actual position respectively assigned to one another with the focusing optical unit position to be set in a target-distance-dependent manner in the context of the autofocusing functionality, a warning message is reproducible and/or
• upon the undershooting of said absolute value threshold, the deviation is automatically and simultaneously included calculationally in the calibration coefficients.

9. Surveying apparatus (1) according to any one of the preceding claims, with the presence of a camera chip (9) for recording an image through the objective (6) and the focusing optical unit (7),
**characterized in that**
the recalibration functionality is implementable fully automatically, in particular at regular time intervals independently.

10. Surveying apparatus (1), in particular video theodolite or video tachymeter, comprising
• a base (17),
• a support (4) pivotable about a first axis (2) relative to the base,
• a targeting unit (5) pivotable about a second axis (3) relative to the support and comprising a telescope optical unit - defining an optical beam path - comprising at least one objective (6) and a motorized-adjustable and manually adjustable focusing optical unit (7) and also in particular
□ an eyepiece (11) and
□ a camera chip (9) for recording an image through the objective,
• goniometers for measuring pivoting positions of the support and the targeting unit,
• an evaluation and control unit, by means of which the positions of the focusing optical unit are storable and computable,
• a camera autofocusing function according to the principle of edge contrast measurement, in particular wherein the camera chip is used as an autofocus sensor for this purpose, or according to the principle of phase comparison, in particular with the use of line or cross sensors as an autofocus sensor, and
• a manual focusing means for adjusting the focusing optical unit in a manner performed under manual control by a user, wherein the image sharpness is assessable evidently by eye by means of at least one observation possibility,
**characterized by**
a correction functionality for the camera autofocusing function, said correction functionality being provided for implementation in the field,
wherein in the context of the correction functionality after the targeting of a target
• a comparison can be made between the focusing optical unit position attained after a manual focusing and the focusing optical unit position attained after a camera autofocusing,
• and the possibly determined difference in the focusing optical unit positions after camera autofocusings with regard to an automatic position correction of the focusing optical unit can be taken into account sweepingly over the entire position range.

11. Surveying apparatus according to Claim 10,
**characterized in that**
at N sighted targets at different distances from the measuring apparatus, N differences in the focusing optical unit positions are determined and these are calculated by interpolation to form difference curves, such that for each focusing optical unit position achievable by a camera autofocusing, an assigned difference is retrievable for position correction.

## Revendications

1. Dispositif d'arpentage (1), en particulier théodolite vidéo ou tachymètre vidéo, avec
• une base (17),
• un appui (4) pivotant par rapport à la base autour d'un premier axe (2),
• une unité de visée pivotante par rapport à l'appui autour d'un second axe (3) avec une optique de télescope qui définit une marche optique des rayons avec au moins un objectif (6) et une optique de focalisation (7) réglable de manière motorisée ainsi
□ qu'un oculaire (11) et/ou
□ une puce de caméra (9) pour prendre une image par l'objectif,
• un goniomètre pour la mesure de positions de pivotement de l'appui et de l'unité de visée,
• un distancemètre électro-optique (12, 13, 14, 15),
• une unité d'analyse et de commande qui met à disposition une fonctionnalité d'auto-focalisation étalonnée pour le réglage automatique de l'optique de focalisation en fonction d'une distance de cible mesurée avec le distancemètre et qui contient des coefficients d'étalonnage mémorisés pour cela pour ce qui est des positions de l'optique de focalisation qui doit être réglée en fonction de la distance de cible et
• au moins un second moyen de focalisation pour la mise au point d'une cible visée (16) qui se fait en fonction d'une distance mesurable avec le distancemètre par ajustement de l'optique de focalisation,
**caractérisé par** une fonctionnalité de réétalonnage qui se déroule au moins partiellement de manière automatique et qui est prévue pour l'exécution dans le champ pour la fonctionnalité d'autofocalisation dépendant de la distance de cible, cependant qu'il est défini, pour la fonctionnalité de réétalonnage, une séquence de N visées devant être exécutées de manière successive, avec N étant plus grand ou égal à deux, sur une i-ème cible respective, avec i en continu de un à N, avec une mise au point respective faite par le second moyen de focalisation et une mesure de distance et que des informations de déroulement correspondantes sont enregistrées dans l'unité d'analyse et de commande
et cependant que, dans le cadre de la fonctionnalité de réétalonnage, l'unité d'analyse et de commande commande ou exécute automatiquement
• pour chaque i-ème des N visées sur un i-ième déclencheur respectif, après que la visée ait été effectuée ainsi qu'après la mise au point de la i-ième cible qui a été faite par les seconds moyens de focalisation, la mesure automatique par le distancemètre d'une i-ième distance et la détection d'une i-ième position réelle de l'optique de focalisation et les ajoute en les associant respectivement l'une à l'autre à un groupe de données de mesure et
• les coefficients d'étalonnage mémorisés sont vérifiés et en particulier, le cas échéant, remplacés automatiquement à l'aide d'une analyse du groupe de données de mesure pour ce qui est de la cohérence des i-ièmes distances et des i-ièmes positions réelles de l'optique de focalisation respectivement associés l'une à l'autre avec les positions de l'optique de focalisation qui doit être réglée en fonction de la distance de cible dans le cadre de la fonctionnalité d'auto-focalisation.

2. Dispositif d'arpentage (1) selon la revendication 1, **caractérisé par** un écran, en particulier une visionneuse électro-optique (EOV), comme possibilité d'observation pour l'affichage d'une image projetée sur le capteur de caméra (9).

3. Dispositif d'arpentage (1) selon l'une des revendications précédentes, **caractérisé en ce que** les seconds moyens de focalisation sont configurés pour le réglage de l'optique de focalisation (7) qui se fait de manière commandée manuellement par un utilisateur, cependant que la netteté de l'image peut être jugée de manière évidente par au moins une possibilité d'observation.

4. Dispositif d'arpentage (1) selon l'une des revendications précédentes en présence d'une puce de caméra (9) pour prendre une image par l'objectif (6) et l'optique de focalisation (7), **caractérisé en ce que** les seconds moyens de focalisation sont configurés pour la focalisation automatique selon le principe de la mesure de contraste des bords, en particulier cependant que la puce de caméra est utilisée pour ceci comme capteur autofocus ou selon le principe de la comparaison de phase, en particulier en utilisant des capteurs de lignes ou des collimateurs de type croisé comme capteurs autofocus.

5. Dispositif d'arpentage (1) selon l'une des revendications précédentes, **caractérisé en ce que** plusieurs groupes de données de mesure peuvent être comptabilisés ensemble pour l'évaluation, en particulier de manière pondérée.

6. Dispositif d'arpentage (1) selon l'une des revendications précédentes, **caractérisé en ce que** les groupes de données de mesure sont calculés en courbes de référence par interpolation, en particulier par approximation accessible avec des polynômes si bien qu'une position de l'optique de focalisation associée peut être consultée pour chaque distance de cible mesurable.

7. Dispositif d'arpentage (1) selon l'une des revendications précédentes, **caractérisé en ce que** la fonctionnalité de réétalonnage peut être exécutée à partir d'une télécommande.

8. Dispositif d'arpentage (1) selon l'une des revendications précédentes, **caractérisé en ce**
• **qu'**un message d'avertissement peut être reproduit lors du dépassement d'un seuil de montant défini pour ce qui est de l'écart entre la i-ième distance respectivement associée et la i-ième position avec la position de l'optique de focalisation à régler en fonction de la distance de cible dans le cadre de la fonctionnalité d'autofocalisation et/ou
• en cas où le seuil de montant n'est pas atteint, il est tenu compte de l'écart de manière automatique et simultanée dans le calcul des coefficients d'étalonnage.

9. Dispositif d'arpentage (1) selon l'une des revendications précédentes en présence d'une puce de caméra (9) pour prendre une image par l'objectif (6) et l'optique de focalisation (7), **caractérisé en ce que** la fonctionnalité de réétalonnage peut être exécutée de manière entièrement automatique, en particulier de manière autonome à intervalles réguliers.

10. Dispositif d'arpentage (1), en particulier théodolite vidéo ou tachymètre vidéo, avec
• une base (17),
• un appui (4) pivotant par rapport à la base autour d'un premier axe (2),
• une unité de visée pivotante par rapport à l'appui autour d'un second axe (3) avec une optique de télescope qui définit une marche optique des rayons avec au moins un objectif (6) et une optique de focalisation (7) réglable de manière motorisée ainsi qu'en particulier
□ un oculaire (11) et/ou
□ une puce de caméra (9) pour prendre une image par l'objectif,
• un goniomètre pour la mesure de positions de pivotement de l'appui et de l'unité de visée,
• une unité d'analyse et de commande avec laquelle les positions de l'optique de focalisation peuvent être mémorisées et calculées,
• une fonction d'autofocalisation de la caméra selon le principe de la mesure de contraste des bords, en particulier cependant que la puce de caméra est utilisée pour ceci comme capteur autofocus ou selon le principe de la comparaison de phase, en particulier en utilisant des capteurs de lignes ou des collimateurs de type croisé comme capteur autofocus et
• un moyen de focalisation manuel pour le réglage de l'optique de focalisation qui se fait en étant commandé de manière manuelle par un utilisateur, cependant que la netteté de l'image peut être jugée de manière évidente par au moins une possibilité d'observation,
**caractérisé par** une fonctionnalité de correction prévue pour l'exécution dans le champ pour la fonction d'autofocalisation de la caméra cependant que, dans le cadre de la fonctionnalité de correction, après visée d'une cible,
• une comparaison peut être faite entre la position de l'optique de focalisation obtenue après une focalisation manuelle et la position de l'optique de focalisation obtenue avec une autofocalisation de la caméra
• et qu'il peut être tenu compte forfaitairement de la différence éventuellement détectée des positions de l'optique de focalisation après des autofocalisations de la caméra pour ce qui est d'une correction automatique de la position de l'optique de focalisation sur l'ensemble de la plage de positions.

11. Dispositif d'arpentage selon la revendication 10, **caractérisé en ce que** N différences des positions de l'optique de focalisation sont détectées sur N cibles visées, se trouvant à différentes distances du dispositif d'arpentage et que celles-ci sont calculées par interpolation en courbes de différences si bien qu'une différence associée par rapport à la correction de la position peut être consultée pour chaque position de l'optique de focalisation pouvant être obtenue par une autofocalisation de la caméra.
